# EUROPEAN PATENT APPLICATION

(11) **EP 4 772 575 A1**
(43) Date of publication of application: **08.07.2026**
(21) Application number: 25150301.7
(22) Date of filing: 06.01.2025
(51) Int. Cl.: C08L 27/06, B33Y 70/00, B33Y 70/10

(54) **A POLYMER MATERIAL FOR USE IN A 3D PRINTING PROCESS**

(71) Applicant: Sika Technology AG, 6340 Baar (CH)
(72) Inventor: LAGEARD, Victoria Claudia Katharina, 6060 Sarnen (CH); HÜBSCHER, Peter, 6060 Sarnen (CH); HUEPPI, Patrick, 8048 Zürich (CH); Z'ROTZ, Roy, 6060 Sarnen (CH)
(74) Representative: Sika Patent Attorneys

(57) **Abstract**

Use of a polymer material in manufacture of 3D articles by means of additive manufacturing, the polymer material comprising:
a) At least one polyvinyl chloride resin P,
b) At least one modifying polymer MP, and
c) Optionally at least one inorganic filler F,
wherein the at least one modifying polymer MP is a terpolymer of an olefin, carbon monoxide and an ethylenically unsaturated carboxylic ester monomer

## Description

### Technical field

The invention relates to polymer materials that are suitable for manufacturing of three-dimensional articles by means of additive manufacturing technology. Particularly, the invention relates to use of polyvinylchloride-based polymer blends in a material extrusion-based 3D-printing process.

### Background art

According to ISO 52900-2015 standard, the term "additive manufacturing" refers to technologies that use successive layers of material to create a three-dimensional (3D) objects. In an additive manufacturing process, the material is deposited, applied, or solidified under computer control based on a digital model of the 3D object to be produced, to create the 3D article. The digital model of the 3D article can be created, for example, by using a CAD software or a 3D object scanner.

Additive manufacturing processes are also referred to using terms such as "generative manufacturing methods" or "3D printing". The term "3D printing" was originally used for an ink jet printing based AM process created by Massachusetts Institute of Technology (MIT) during the 1990s. Compared to conventional technologies, which are based on object creation through either molding/casting or subtracting/machining material from a raw object, additive manufacturing technologies follow a fundamentally different approach for manufacturing. Particularly, it is possible to change the design for each object, without increasing the manufacturing costs, offering tailor made solutions for a broad range of products.

Generally, in an additive manufacturing process, a 3D article is manufactured using a shapeless material (e.g. liquids, powders, granules, pastes, etc.) and/or a shape-neutral material (e.g. bands, wires, filaments) that is subjected to chemical and/or physical processes (e.g. melting, polymerization, sintering, curing or hardening). The main categories of additive manufacturing technologies include VAT photopolymerization, material extrusion, material jetting, binder jetting, powder bed fusion, direct energy deposition, and sheet lamination techniques. Widely used additive manufacturing technologies based on material extrusion include fused filament fabrication (FFF) and fused particle fabrication (FPF).

In a fused filament fabrication (FFF) process, also known as fused deposition modeling (FDM), a 3D article is produced based on a digital model of the 3D article using a polymer material in form of a filament. In a FFF process, a polymer filament is fed into a moving printer extrusion head, heated past its glass transition temperature or melting temperature, and then deposited through a heated nozzle of the printer extrusion head as series of layers in a continuous manner. After the deposition, the layer of polymer material solidifies and fuses with the already deposited layers. A fused particle fabrication (FPF), also known as fused granular fabrication (FGF), differs from a FFF process only in that the polymer material is provided in form of particles, such as granules or pellets, instead of a filament.

Commonly used thermoplastic materials for fused filament fabrication and fused particle fabrication processes include particularly acrylonitrile butadiene styrene (ABS), polylactic acid (PLA), polycarbonate (PC), and polyamide (PA). For example, a published patent application EP 3 476 898 A1 discloses a thermoplastic polymer composition for use in 3D printing comprising at least 25 wt.-% of an amorphous polyamide, at least 5 wt.-% of a crystalline or semicrystalline thermoplastic polymer, and optionally at least 1 wt.-% of a filler.

Polyvinylchloride (PVC) is a commonly used material in many commercial applications due to its high strength and low costs. However, the use PVC as a material for 3D printing, especially in material extrusion 3D printing, is known to be notoriously difficult due to the inherent shrinkage of the polymer material upon cooling, low adhesion to the building plate, and poor bonding between the printed layers. Consequently, PVC is generally not a preferred material for 3D printing.

The challenges in using PVC in 3D printing have until now remained widely unsolved. There is thus a need for a PVC-based material, which is suitable for use as a 3D printing material, particularly for 3D printers operating with fused filament fabrication (FFF) or fused particle fabrication (FPF) techniques.

### Disclosure of the invention

It is an object of the present invention to provide a PVC-based material, which is suitable for use in providing three-dimensional articles using material extrusion based 3D-printing techniques, particularly fused filament fabrication (FFF) or fused particle fabrication (FPF) processes.

Surprisingly, it has been found out that the object can be achieved by the features of claim 1.

Especially, it has been found out that the polymer material as defined in claim 1 enables fast and cost-efficient production of customized PVC-based 3D articles with complex shapes using material extrusion based 3D printing techniques.

One of the advantages of the polymer material of the present invention is that modifying a PVC-based material to be suitable for 3D printing can be realized without having a negative impact on the mechanical properties of the 3D printed article. Consequently, the 3D printed articles obtained by using the polymer material are suitable for use in demanding applications, for example, as roofing and/or waterproofing materials. Furthermore, the additional compounds used for modifying the basic PVC material do not significantly increase the total costs of the polymer material.

Further aspects of the present invention are defined in further independent claims. Preferred embodiments are outlined throughout the description and the dependent claims.

### Detailed description

The subject of the present invention is use of a polymer material for the manufacture of 3D articles by an additive manufacturing process, the polymer material comprising:
a) At least one polyvinyl chloride resin **P,**
b) At least one modifying polymer **MP,** and
c) Optionally at least one inorganic filler **F.**
wherein the at least one modifying polymer **MP** is a terpolymer of an olefin, carbon monoxide and an ethylenically unsaturated carboxylic ester monomer.

The abbreviation "3D" is used throughout the present disclosure for the term "three-dimensional.

The term "polymer" refers to a collective of chemically uniform macromolecules produced by a polyreaction (polymerization, polyaddition, polycondensation) of monomers of same of different type where the macromolecules differ with respect to their degree of polymerization, molecular weight, and chain length. The term also encompasses derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "molecular weight" refers to the molar mass (g/mol) of a molecule or a part of a molecule, also referred to as "moiety". The term "average molecular weight" refers to number average molecular weight (Mₙ) or to weight average molecular weight (M_{w}) of an oligomeric or polymeric mixture of molecules or moieties. The molecular weight may be determined by gel permeation chromatography (GPC) using polystyrene as standard, styrene-divinylbenzene gel with porosity of 100 Angstrom, 1000 Angstrom and 10000 Angstrom as the column and, depending on the molecule, tetrahydrofurane as a solvent, at 35°C, or 1,2,4-trichlorobenzene as a solvent, at 160 °C.

The term "melting temperature" or "melting point" refers to a temperature at which a material undergoes transition from the solid to the liquid state. The melting temperature (Tₘ) is preferably determined by differential scanning calorimetry (DSC) according to ISO 11357-3 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of the at least one modifying polymer MP" refers to the sum of the individual amounts of all modifying polymers MP contained in the composition. Furthermore, in case the composition comprises 20 wt.-% of at least one modifying polymer MP, the sum of the amounts of all modifying polymers MP contained in the composition equals 20 wt.-%.

The term "normal room temperature" designates a temperature of 23 °C.

The term "polyvinylchloride (PVC) resin" designates in the present disclosure all types PVC resins obtained by a polymerization process, including, for example, polyvinylchloride suspension (PVC-S) resins produced by suspension polymerization process and polyvinyl chloride emulsion (PVC-E) resins produced by emulsion polymerization process.

In embodiment, the at least one PVC resin **P** comprises or is composed of at least one polyvinylchloride suspension (PVC-S) resin.

The expression "the at least one component X comprises at least one compound", for example, "the at least one PVC resin P comprises at least one PVC-S resin", is understood to mean that the composition comprises at least one PVC-S resin as representative(s) of the at least one PVC resin P.

Furthermore, the at least one polyvinylchloride resin **P** may have a K-value determined by using the method as described in ISO 1628-2-1998 standard in the range of 50 - 85, preferably 50 - 80, more preferably 50 - 75, still more preferably 50 - 65. The K-value is a measure of the polymerization grade of the PVC-resin and it is determined from the viscosity values of the PVC homopolymer as virgin resin, dissolved in cyclohexanone at 30° C. PVC resins having a K-value falling within the above cited ranges have been found out to be especially suitable for use in the polymer material for 3D printing.

In exemplary embodiments, the polymer material comprises 30 - 85 wt.-%, preferably 35 - 80 wt.-%, more preferably 40 - 75 wt.-%, still more preferably 40 - 70 wt.-% of the at least one PVC resin **P.**

The polymer material further comprises at least one modifying polymer **MP,** which is a terpolymer of an olefin, carbon monoxide and an ethylenically unsaturated carboxylic ester monomer. The term "terpolymer" refers in the present disclosure to polymers derived from three species of monomers.

The olefin monomer of the terpolymer preferably comprises 2-10 carbon atoms, more preferably 2 - 6 carbon atoms.

Preferred ethylenically unsaturated carboxylic ester monomers are selected from vinyl esters of saturated carboxylic acids and alkyl esters of an α, β- ethylenically unsaturated carboxylic acids.

In embodiments, the olefin monomer is selected from ethylene, propylene, and butylene and/or the carboxylic ester monomer is selected from C₁-C₈ alkyl (meth)acrylates, diethyl maleate, dimethyl fumarate, vinyl acetate, and vinyl propionate.

The term "(meth)acrylate" designates in the present disclosure both acrylate and methacrylate.

In preferred embodiments, the olefin monomer is selected from ethylene, propylene, and butylene and/or the carboxylic ester monomer is selected from methyl acrylate, ethyl acrylate, propyl acrylate, butyl acrylate, and vinyl acetate, particularly from ethyl acrylate, propyl acrylate, and butyl acrylate, and vinyl acetate, especially from ethyl acrylate, butyl acrylate, and vinyl acetate.

In exemplary embodiments, the at least one modifying polymer **MP** is selected from ethylene/ethyl acrylate/carbon monoxide terpolymer, ethylene/n-butyl acrylate/carbon monoxide terpolymer, and ethylene/vinyl acetate/carbon monoxide terpolymer, particularly from ethylene/n-butyl acrylate/carbon monoxide terpolymer and ethylene/vinyl acetate/carbon monoxide terpolymer.

Especially, the least one modifying polymer **MP** may have:
- a melt flow index (190 °C/2.16 kg) determined according to ISO 1133-1:2011 standard of not more than 50 g/10 min, preferably not more than 35 g/10 min and/or at least 5 g/10 min, preferably at least 8 g/10 min, more preferably at least 12 g/10 min and/or
- a melting temperature determined by differential scanning calorimetry (DSC) according to ISO 11357-3:2018 standard using a heating rate of 2 °C/min of 35 - 100 °C, preferably 50 - 85 °C, more preferably 50 - 70 °C and/or
- glass transition temperature determined by dynamical mechanical analysis (DMA) according to ISO 6721-11:2019 standard of at or below -10 °C, preferably at or below -30 °C, more preferably at or below -50 °C.

In exemplary embodiments, the polymer material comprises 2.5 - 60 wt.-%, preferably 5 - 50 wt.-%, more preferably 10 - 40 wt.-%, even more preferably 10 - 35 wt.-% of the at least one modifying polymer **MP.**

In embodiments, the polymer material further comprises at least one inorganic filler **F.**

Suitable compounds for use as the at least one inorganic filler **F** include, for example, sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, graphite, bauxite, comminuted concrete, zeolites, and inorganic fibrous fillers.

Generally, both non-coated and coated versions of the discussed inorganic fillers are suitable for use as the at least one inorganic filler **F.**

The term "fibrous filler" refers in the present disclosure to fibers as well as to needle-shaped fillers, also known as whiskers, which typically have a fiber length of less than 250 µm, particularly of less than 100 µm.

Suitable fibrous fillers for use as the at least one inorganic filler **F** include, for example, glass fibers, silicon carbide fibers, carbon fibers, basalt fibers, alumina fibers, steel fibers, needle-shaped Wollastonite, and magnesium oxysulfate whiskers.

Preferably, the at least one inorganic filler **F** has a water-solubility of less than 0.1 g/100 g water, more preferably less than 0.05 g/100 g water, even more preferably less than 0.01 g/100 g water, at a temperature of 20 °C. The solubility of a compound in water can be measured as the saturation concentration, where adding more compound does not increase the concentration of the solution, i.e. where the excess amount of the substance begins to precipitate. The measurement for water-solubility of a compound in water can be conducted using the standard "shake flask" method as defined in the OECD test guideline 105 (adopted 27^{th} July, 1995).

In embodiments, the at least one inorganic filler **F** is a fibrous filler, preferably having a volume-based mean aspect ratio (length/diameter) of 3 - 50, preferably 5 - 35 and/or a volume-based mean particle length L₅₀ of at least 5 µm, preferably at least 15 µm and/or a volume-based mean particle length L₉₀ of not more than 250 µm, preferably not more than 150 µm.

The term "aspect ratio" of a particle refers in the present disclosure to the value obtained by dividing the length (L) by the diameter (D) of the particle. The "length of a particle" refers in the present disclosure to the maximum Feret diameter (X_{Fe,max}), i.e. the longest Feret diameter out of the measured set of Feret diameters. The term "Feret diameter" refers to the distance between two tangents on opposite sides of the particle, parallel to some fixed direction and perpendicular to the measurement direction. The "diameter of a particle" refers in the present disclosure to the minimum Feret diameter (X_{Fe,min}), i.e. the shortest Feret diameter out of the measured set of Feret diameters. The aspect ratio can, therefore, calculated as the ratio of X_{Fe,max} and X_{Fe,min}.

The aspect ratio of a particle can be determined by measuring the length and diameter of the particle using any suitable measurement technique, such as by using dynamic image analysis method conducted according to ISO 13322-2:2006 standard and calculating the aspect ratio from the measured dimensions of the particle as described above. The dimensions of particles are preferably measured with a dry dispersion method, where the particles are dispersed in air, preferably by using air pressure dispersion method. The measurements can be conducted using any type of dynamic image analysis apparatus, such as a Camsizer XT device (trademark of Retsch Technology GmbH).

The term "volume-based mean aspect ratio" refers in the present disclosure to the aspect ratio below which 50 % of all particles by volume have a smaller aspect ratio than the value of the mean aspect ratio. In analogy, the term "volume-based mean length L₅₀" refers in the present disclosure to the length below which 50 % of all particles by volume have a smaller length than the value of the mean length L₅₀.

In exemplary embodiments, the at least one inorganic filler **F** is selected from glass fibers, silicon carbide fibers, alumina fibers, and needle-shaped Wollastonite.

In further exemplary embodiments, the at least one inorganic filler **F** comprises at least one needle-shaped Wollastonite filler, preferably surface-coated needle-shaped Wollastonite filler, particularly comprising a surface coating of silane, especially amino silane.

In still further embodiments, the at least one inorganic filler **F** is a needle-shaped Wollastonite filler, preferably surface-coated needle-shaped Wollastonite filler, particularly comprising a surface coating of silane, especially amino silane.

In embodiments, the polymer material comprises 30 - 85 wt.-%, preferably 35 - 80 wt.-%, more preferably 40 - 75 wt.-% of the at least one polyvinyl chloride resin **P** and/or 2.5 - 60 wt.-%, preferably 5 - 50 wt.-%, more preferably 10 - 40 wt.-% of the at least one modifying polymer **MP** and/or 0-40 wt.-%, preferably 5 - 40 wt.-%, more preferably 10 - 35 wt.-% of the at least one inorganic filler **F.**

The polymer material may further comprise various additives, for example, thermal stabilizers and co-stabilizers, UV-absorbers, antioxidants, plasticizers, dyes, color pigments, matting agents, antistatic agents, impact modifiers, biocides, and processing aids such as lubricants, slip agents, antiblock agents, and denest aids. The total weight of these types of additives is preferably not more than 30 wt.-%, particularly not more than 25 wt.-%, especially not more than 15 wt.-%, based on the total weight of the polymer material.

In exemplary embodiments, the polymer material further comprises at least one color pigment **CP,** preferably selected from the group consisting of titanium dioxide, iron oxide, chrome oxide, mixed metal oxides, bismuth-vanadate, bismuth-molybdate, ultramarine-types, carbon black, polycyclic-types, phthalocyanine-types, azo-types, pearlescent with and without TiO₂ coating, photoluminescent, luminescent, and flop-pigments.

Especially, the at least one color pigment **CP** may have a mean particle size d₅₀ of not more than 3000 nm, particularly not more than 2000 nm, especially not more than 1500 nm.

In embodiments, the at least one color pigment **CP** has a has a mean particle size d₅₀ of 10 - 3000 nm, particularly 15 - 2000 nm, especially 20 - 1500 nm.

Especially, the polymer material may contain 0.1 - 15 wt.-%, particularly 1 - 10 wt.-% of the at least one color pigment **CP,** preferably selected from titanium dioxide, iron oxide, chrome oxide, mixed metal oxides, bismuth-vanadate, bismuth-molybdate, ultramarine-types, carbon black, polycyclic-types, phthalocyanine-types, azo-types, pearlescent with and without TiO2 coating, photoluminescent, luminescent, and flop-pigments.

The polymer material may further comprise one or more UV-stabilizers and/or UV-absorbers, preferably at least one hindered amine light stabilizer (HALS). These types of compounds are typically added to polymer blends to prevent light-induced polymer degradation. Such UV-stabilizers are needed especially in case the 3D article is used in outdoor applications.

Suitable hindered UV-absorbers and amine light stabilizers (HALS) include, for example, phenol, 2-(5-chloro-2H-benzotriazol-2-yl)-6-(1,1-dimethylethyl)-4-methyl, 2-(2H-Benzotriazol-2-yl)-p-cresol, 2-Hydroxy-4-n-octyloxybenzophenone bis (2,2,6,6-tetramethylpiperidyl)-sebacate; bis-5(1,2,2,6,6-pentamethylpiperidyl)-sebacate; 2-(2H-benzotriazol-2-yl)-4-(tert-butyl)-6-(sec-butyl)phenol, Decanedioic acid, bis (2,2,6,6-tetramethyl-1-(octyloxy)-4-piperidinyl) ester, n-butyl-3,5-di-tert-butyl-4-hydroxybenzyl malonic acid bis(1,2,2,6,6,-pentamethylpiperidyl)ester; condensation product of 1-hydroxyethyl-2,2,6,6-tetramethyl-4-hydroxy-piperidine and succinic acid; condensation product of N,N'-(2,2,6,6-tetramethylpiperidyl)-hexamethylenediamine and 4-tert-octylamino-2,6-dichloro-1,3,5-s-triazine; tris-(2,2,6,6-tetramethylpiperidyl)-nitrilotriacetate; tetrakis-(2,2,6,6-tetramethyl-4-piperidyl)-1,2,3,4-butane-tetra-arbonic acid; and 1,1'(1,2-ethanediyl)-bis-(3,3,5,5-tetramethylpiperazinone).

Suitable hindered amine light stabilizers are commercially available, for example, under the trade name of Tinuvin^{®} (from Ciba Specialty Chemicals), such as Tinuvin 326, Tinuvin P, Chimassorb 81, Tinuvin^{®} 371, Tinuvin^{®} NOR 356, Tinuvin^{®} 123, Tinuvin^{®} 622, and Tinuvin^{®} 770; under the trade name of Chimassorb^{®} (from Ciba Specialty Chemicals), such as Chimassorb^{®} 119, Chimassorb^{®} 944, Chimassorb^{®} 2020; and under the trade name of Cyasorb^{®} (from Cytec Industries), such as Cyasorb^{®} UV 3346, Cyasorb^{®} UV 3529, Cyasorb^{®} UV 4801, and Cyasorb^{®} UV 4802; and under the trade name of Hostavin^{®} (from Clariant), such as Hostavin N30.

The polymer material may further comprise one or more thermal stabilizers and co-stabilizers.

Suitable thermal stabilizers for use in the polymer material include, for example, metal and mixed metal stabilizers, such as calcium zinc stabilizers, for example consisting mainly of calcium stearate, zinc stearate, and organic and inorganic non-toxic co-stabilizers; lead-based stabilizers, for example, containing a combination of lead stearate, dibasic lead stearate, and lubricants; liquid mixed metal stabilizers, for example, based on metal octoates of barium, cadmium, kalium, and zinc; and organotin stabilizers.

The total weight of such metal and mixed metal thermal stabilizers in the polymer material is preferably less than 10 wt.-%, particularly less than 6 wt.-%.

Suitable thermal co-stabilizers for use in the polymer material include, for example, phenolic primary antioxidants, beta diketones and their derivatives, epoxy compounds, organic phosphites, polyols, inorganic stabilizers such as hydrotalcites and perchlorates.

The total weight of such thermal co-stabilizers in the polymer material is preferably less than 10 wt.-%, particularly less than 5 wt.-%.

The polymer material may further comprise one or more processing aids, such as gelation aids and lubricants. These types of processing aids are typically added to polymer blends to influence the elasticity and/or the rheological behavior and/or to accelerate the melting process without significantly changing the properties of the material during the 3D printing process.

Suitable processing aids for use in the polymer material include, for example, acrylic copolymers, fatty acids and their salts with chain lengths of C₁₂ - C₂₂, fatty acid amides with chain lengths of C₁₅ - C₂₀, fatty acid esters with chain lengths of C₂₅ - C₃₅, oxidized polyolefin waxes with chain lengths of C₅₀ - C₇₀, paraffin waxes with chain lengths of C₂₀ - C₇₀, polyolefin waxes with chain lengths of C₁₂₀ - C₇₀₀. The total weight of such processing aids in the polymer material is preferably less than 5 wt.-%, particularly less than 3 wt.-%. The polymer material is used for the manufacture of 3D articles by an additive manufacturing process, preferably selected from a fused filament fabrication and a fused particle fabrication process.

In a fused filament fabrication (FFF) process, a polymer filament is fed into a moving printer extrusion head, heated past its glass transition temperature (T_{g}) or melting temperature (Tₘ), and then deposited through a heated nozzle of the printer extrusion head as series of layers in a continuous manner. After the deposition, the layer of polymer material solidifies and fuses with the already deposited layers. The printer extrusion head is moved under computer control to define the printed shape based on control data calculated from the digital model of the 3D article.

A fused particle fabrication (FPF), also known as fused granular fabrication (FGF), differs from a FFF process only in that the polymer material is provided in form of particles, such as granules or pellets, instead of a filament.

Another aspect of the present invention is a method for producing a 3D article comprising the following steps:
i) Providing a digital model of the 3D article,
ii) Based on the digital model, printing the inventive polymer material as described above using a 3D printer to form the 3D article.

In embodiments, the 3D printer is a fused filament fabrication or a fused particle fabrication printer.

A "digital model" refers to a digital representation of a real world object, for example of a roof detailing part, that exactly replicates the shape of the object. Typically, the digital model is stored in a computer readable data storage, especially in a data file. The data file format can, for example, be a computer-aided design (CAD) file format or a G-code (also called RS-274) file format.

In embodiments, step ii) of the method comprises steps of:
ii1) Feeding the polymer material into the 3D printer,
ii2) Heating the polymer material to provide a melted polymer material,
ii3) Depositing the melted polymer material by using a printer extrusion head of the 3D printer in a selected pattern in accordance with the digital model of the 3D article to form the 3D article.

In step ii2) of the method, the polymer material is preferably heated to a temperature, which is above the melting point of the at least one polyvinylchloride resin **P** to obtain the melted polymer material.

The movements of the printer extrusion head in step ii3) of the method are controlled according to control data calculated based on the digital model of the 3D article. The digital model of the 3D article is preferably first converted to a STL file to tessellate the 3D shape of the article and to slice it into digital layers. The STL file is transferred to the 3D printer using custom machine software. A control system, such as a computer-aided manufacturing (CAM) software package, is used to generate the control data based on the STL file. The control system can be part of the 3D printer, or it can be part of a separate data processing unit, for example a computer system.

The digital model of the 3D article may be obtained by 3D scanning of the 3D article. 3D scanning is a process of analyzing a real-world object, for example a roof detailing part, to collect data on its shape. The collected data can then be used to construct the digital model of the object. Thereby, a control system can be used to generate the digital model out of the collected data. The control system can be part of the 3D scanner or it can be part of a separate data processing unit, for example a computer system. It is however also possible to obtain the digital model by measuring all of the lengths and angles of the 3D article by hand and generating the digital model manually using a modelling software. Nevertheless, this tends to be time consuming and more error-prone than 3D scanning.

There are many different 3D scanners available on the market, which can be used for 3D scanning. The scanning of the 3D article is performed with a handheld and/or portable 3D scanner. Handheld and/or portable 3D scanners do not need a complicated installation and allow for a quick and easy scanning of the 3D article to be produced.

Preferably, the 3D scanner is designed for capturing objects from 1 cm to 20 m, especially 20 cm to 10 m, in length.

Especially, the 3D scanner is a non-contact 3D scanner. Such kind of scanners emit some kind of radiation, e.g. light, ultrasound or x-rays, and detect its reflection or radiation passing through the object to be scanned in order to probe the object.

For example, the 3D scanner is a scanner of type "calibry 3d scanner" by the company Thor3d, Varshavskoe Sh. 33, Moscow, Russia.

A further aspect of the invention is a 3D article obtained an additive manufacturing process using the polymer material of the present invention.

In embodiments, the additive manufacturing process is preferably a fused filament fabrication or a fused particle fabrication process.

### Examples

The raw materials presented in Table 1 were used in the examples:

**Table 1**

| | | |
|---|---|---|
| Inovyn PVC 250 SB | Suspension PVC, K value 50 | Inovyn |
| Elvaloy HP 662 | Ethylene/n-butyl acrylate/carbon monoxide terpolymer | Dow Chemical Company |
| Kronos 2220 | Titanium dioxide pigment | Kronos |
| Paraloid K 175 | Gelation processing aid | Dow Chemical Company |
| Baerostab MC 8763-1 CP | Thermal stabilizer | Baerlocher GmbH |
| Naftovin E 420 | Epoxidized linseed oil (co-stabilizer) | Chemson Polymer-Additive AG |
| Tinuvin 371 FF | Hindered amine light stabilizer | BASF |
| A-C- 316-A | High density, oxidized polyethylene homopolymer (lubricating processing aid) | Honeywell |
| Kane Ace UF 100 | Acrylic impact copolymer | Kaneka |
| Naftosafe PXX 4487 | Thermal stabilizer | Akdeniz Chemson |
| Tremin 939-800 AST | Amino silane treated Wollastonite with needle-structure | Quarzwerke GmbH |

### Manufacture of pellets

The pellets for a fused particle fabrication (FPF) process were prepared according to the following procedure.

A portion of the raw materials of the polymer composition were premixed in a tumbler mixer and then fed to a ZSK laboratory twin-extruder (LID 44) via a gravimetric dosing scale. Another portion of the raw materials was fed directly via gravimetric dosing trolleys into the laboratory extruder. The raw materials were mixed, dispersed, homogenized, and discharged via the holes of perforated extrusion nozzles. The extruded strands were cooled using a water bath and cut into pellets with suitable dimensions. The pellets were then dried in an oven to remove residual moisture.

### 3D printing properties of polymer compositions

Suitability of the polymer compositions prepared as described above for 3D printing was tested by using the pellets as feed material in a fused particle fabrication process.

3D articles having a form a hollow cube composed of four outer walls having dimensions of 200 mm x 200 mm were manufactured from the tested polymer materials with a Yizumi SpaceA 3D printer. Each 3D-printed article was composed of 222 layers.

The 3D printing was conducted using the process parameters as presented in Table 2 below.

**Table 2**

| | |
|---|---|
| Primary layer height [mm] | 1 - 1.2 |
| Printed head speed [m/s] | 25-30 |
| Cooling power [%] | 100 |
| Nozzle size [mm] | 2 and 3 |
| Extruder rotation speed [rpm] | 22-35 |
| Feed zone temperature [°C] | 60-80 |
| Heating zone temperature 1 [°C] | 150 |
| Heating zone temperature 2 [°C] | 160-170 |
| Heating zone temperature 3 [°C] | 170 |
| Nozzle temperature [°C] | 170 |

Suitability of each tested polymer composition for use as feed material for the 3D printing was estimated based visual observation of the 3D printed articles ("printing test result"). The polymer composition of the reference example could not be 3D printed due to too low adhesive between consecutive printed layers.

The constituents of the tested polymer compositions and properties of the 3D printed articles are presented in Table 3.

**Table 3**

| **Compositions [wt-%]** | **Ref-1** | **Ex-1** | **Ex-2** | **Ex-3** |
|---|---|---|---|---|
| Inovyn PVC 250 SB | 71.33 | 64.85 | 52.85 | 48.97 |
| Elvaloy HP 662 | 0.00 | 19.46 | 15.86 | 14.69 |
| Kronos 2220 | 8.56 | 7.78 | 6.34 | 5.88 |
| Paraloid K 175 | 2.14 | 1.95 | 1.59 | 1.47 |
| Baerostab MC 8763-1 CP | 0.00 | 3.89 | 3.17 | 2.94 |
| Naftovin E 420 | 3.57 | 1.62 | 1.32 | 1.22 |
| Tinuvin 371 FF | 0.36 | 0.32 | 0.26 | 0.24 |
| A-C- 316-A | 0.14 | 0.13 | 0.11 | 0.10 |
| Kane Ace UF 100 | 7.13 | 0.00 | 0.00 | 0.00 |
| Naftosafe PXX 4487 | 6.78 | 0.00 | 0.00 | 0.00 |
| Tremin 939-800 AST | 0.00 | 0.00 | 18.50 | 24.49 |
| **Total** | 100.00 | 100.00 | 100.00 | 100.00 |
| **Printing test result** | No layer adhesion | Ok | Good | Very good |

## Claims

1. Use of a polymer material for the manufacture of 3D articles by an additive manufacturing process, the polymer material comprising:
a) At least one polyvinyl chloride resin **P,**
b) At least one modifying polymer **MP,** and
c) Optionally at least one inorganic filler **F,**
wherein the at least one modifying polymer **MP** is a terpolymer of an olefin, carbon monoxide and an ethylenically unsaturated carboxylic ester monomer

2. Use according to claim 1, wherein at least one polyvinylchloride resin **P** has a K-value determined by using the method as described in ISO 1628-2-1998 standard in the range of 50 - 85, preferably 50 - 80.

3. Use according to claim 1 or 2, wherein the olefin monomer is selected from ethylene, propylene, and butylene and/or the carboxylic ester monomer is selected from C₁-C₈ alkyl (meth)acrylates, diethyl maleate, dimethyl fumarate, vinyl acetate, and vinyl propionate.

4. Use according to any one of previous claims, wherein the olefin monomer is selected from ethylene, propylene, and butylene and/or the carboxylic ester monomer is selected from methyl acrylate, ethyl acrylate, propyl acrylate, butyl acrylate, and vinyl acetate.

5. Use according to any one of previous claims, wherein the at least one modifying polymer **MP** has a melt flow index (190 °C/2.16 kg) determined according to ISO 1133-1:2011 standard of not more than 50 g/10 min, preferably not more than 35 g/10 min.

6. Use according to any one of previous claims, wherein the at least one inorganic filler **F** is a fibrous filler having a volume-based mean aspect ratio (length/diameter) of 3 - 70, preferably 5 - 35 and/or a volume-based mean particle length L₅₀ of at least 5 µm, preferably at least 15 µm and/or a volume-based mean particle length L₉₀ of not more than 250 µm, preferably not more than 150 µm.

7. Use according to any one of previous claims, wherein the at least one inorganic filler **F** is selected from glass fibers, silicon carbide fiber, alumina fibers, and needle-shaped Wollastonite fillers.

8. Use according to any one of previous claims, wherein the at least one inorganic filler **F** comprises at least one needle-shaped Wollastonite filler, preferably at least one surface-coated needle-shaped Wollastonite filler, particularly comprising a surface coating of silane, especially amino silane.

9. Use according to any one of previous claims, wherein the polymer material further comprises at least one color pigment **CP,** preferably selected from the group consisting of titanium dioxide, iron oxide, chrome oxide, mixed metal oxides, bismuth-vanadate, bismuth-molybdate, ultramarine-types, carbon black, polycyclic-types, phthalocyanine-types, azo-types, pearlescent with and without TiO2 coating, photoluminescent, luminescent, and flop-pigments.

10. Use according to any one of previous claims, wherein the polymer material comprises 30 - 85 wt.-%, preferably 35 - 80 wt.-% of the at least one polyvinyl chloride resin **P** and/or 2.5 - 60 wt.-%, preferably 5 - 50 wt.-% of the at least one modifying polymer **MP** and/or 0-40 wt.-%, preferably 5-40 wt.-%, of the at least one inorganic filler **F.**

11. Use according to any one of previous claims, wherein the additive manufacturing process is a fused filament fabrication process or a fused particle fabrication process.

12. Method for producing a 3D article comprising the following steps:
i) Providing a digital model of the 3D article,
ii) Based on the digital model, printing a polymer material as defined in any one of previous claims using a 3D printer to form the 3D article.

13. Method according to claim 12, wherein the 3D printer is a fused filament fabrication or a fused particle fabrication printer.

14. A 3D article obtained by an additive manufacturing process using the polymer material as defined in any one of claims 1-12.

15. The 3D article according to claim 14, wherein the additive manufacturing process is a fused filament fabrication or a fused particle fabrication process.
